# FASCICULE DE BREVET EUROPEEN

(11) **EP 2 101 089 B1**
(45) Date de publication et mention de la délivrance du brevet: **17.08.2011**
(21) Numéro de dépôt: 09154498.1
(22) Date de dépôt: 06.03.2009
(51) Int. Cl.: F16H 61/36, B62D 65/10

(54) **Procédé de montage d'une commande de boîte de vitesses en position haute pour véhicule, et dispositif pour la mise en oeuvre d'un tel procédé**
Montageverfahren einer Steuerung eines Schaltgetriebes in hoher Position für Fahrzeug und Vorrichtung für die Umsetzung eines solchen Verfahrens
Method for assembling a gearbox control in raised position for a vehicle, and device for implementing such a method

(30) Priorité: 14.03.2008 FR 0851666
(43) Date de publication de la demande: 16.09.2009
(73) Titulaire: Peugeot Citroën Automobiles SA, 78140 Vélizy-Villacoublay (FR)
(72) Inventeur: Deplat, Frédéric, 94350, Villiers sur Marne (FR); Poirier, Cédric, 94410 Corbreuse (FR)

(56) Documents cités:
- EP-A- 0 575 861
- DE-A1- 10 261 830
- US-A1- 2003 221 503

## Description

La présente invention concerne un procédé de montage d'une commande de boîte de vitesses en position haute pour véhicule, en particulier pour véhicule automobile. Dans le présent texte, on appelle "commande de boîte de vitesses en position haute", une commande de boîte de vitesses avec un levier de vitesses fixé au tableau de bord. La présente invention concerne également un dispositif pour la mise en oeuvre d'un tel procédé.

En fabrication automobile, de façon conventionnelle, on prépare à part de la ligne de montage sur un poste désigné "Préparation d'Organiques Mécaniques" ou "POM", l'ensemble constitué par le moteur thermique, sa ligne d'échappement et la boîte de vitesses fixée au moteur thermique. Cet ensemble est ensuite transporté sur la ligne de montage, et il est coiffé par la carrosserie. A ce stade, un opérateur réalise le câblage de la boîte de vitesses, c'est-à-dire la connexion des câbles de la commande de boîte (en général, deux câbles), d'un côté à la boîte de vitesses elle même et, de l'autre côté, au levier de vitesses.

On connaître par exemple, selon le document EP 0 575 861 B1 qui représente l'état de la technique le plus proche, un système de commande de boîte de vitesses pour un véhicule ayant un volant de direction et un tableau de bord, du type comprenant un levier de commande séparé de la structure de support du volant de direction, et des moyens de transmission reliés fonctionnellement au levier de commande et à la boîte de vitesses, le levier de commande étant monté sur un support fixé au tableau de bord à côté du volant de direction et étant dirigé vers le haut, sensiblement parallèlement à l'axe du volant de direction. Le levier de commande est monté rotatif par rapport au support autour d'un premier axe d'articulation et d'un deuxième axe d'articulation, perpendiculaire audit premier axe. Un premier et un deuxième bras, sensiblement parallèles au premier axe d'articulation et au deuxième axe d'articulation, respectivement, sont fixés au levier pour commander l'engagement et la sélection des rapports par les moyens de transmission respectifs.

Selon ce document, il est décrit procédé de montage d'une commande de boîte de vitesses en position haute pour véhicule, dans lequel
- on place un support de montage traversé par des câbles de commande de boîte de vitesses, au dessus d'un écran thermique en empêchant le support de montage de pouvoir pivoter (cela est réalisé par les mains de l'opérateur qui place le support sur la caisse avant de le fixer) ;
- on raccorde une première extrémité des câbles à une boîte de vitesse ;
- on coiffe l'écran thermique avec une caisse de façon à retenir le support de montage au dessus de l'écran thermique et à laisser émerger de la caisse, une deuxième extrémité des câbles vers le haut ;
- on fixe le support de montage sur la caisse.

Qu'il s'agisse d'une commande de vitesses à levier de vitesses en position haute ou en position basse, les câbles de la commande relient un élément de l'ensemble préparé sur le poste "POM" à un élément de la carrosserie livré sur la ligne de montage principale, c'est-à-dire relie deux éléments qui sont préparés séparément et mis en place ensuite l'un par rapport à l'autre sur la ligne de montage principale.

Sur la ligne de montage principale, les câbles de la commande de vitesse, déjà connectés à la boîte de vitesses, arrivent par le dessous du véhicule pour que leur extrémité libre soit connectée au levier de vitesses, notamment au levier de vitesses fixé au tableau de bord. Les câbles passent à travers une ouverture ménagée dans la partie de carrosserie inférieure appelée généralement tunnel. En passant dans cette ouverture, il y a un risque d'accrochage et d'endommagement des câbles.

La demande de brevet français déposée le 19 mars 2007 au nom de la Demanderesse, (référence interne 36447/JPL), décrit un procédé de montage d'une commande de boîte de vitesses en position haute pour véhicule qui permet de préparer, avant l'opération de coiffage de la carrosserie sur la ligne de montage principale, l'ensemble de commande de vitesses avec les câbles de commande déjà connectés à la boîte de vitesses. Les câbles de liaison sont connectés à la boîte de vitesses sur le poste de montage séparé de la ligne de montage principale. L'ensemble mécanique qui comprend la boîte de vitesses avec les câbles de liaison déjà connectés, est transporté du poste de montage vers la ligne de montage principale, puis l'ensemble mécanique est coiffé par la carrosserie, une ouverture étant prévue dans la carrosserie pour le passage des câbles de liaison et un dispositif de guidage étant prévu sur l'ensemble mécanique pour guider les câbles au travers de l'ouverture, de manière à éviter tout accrochage des câbles de liaison. L'ensemble mécanique est fixé à la carrosserie et ensuite, les extrémités libres des câbles de liaison sont récupérées par l'opérateur de montage à l'intérieur de l'habitacle, afin de les connecter au levier de vitesses.

Un principe semblable existe déjà sur des plateformes pour lesquelles les commandes de vitesses sont de type basses sur la console. Dans ces configurations, les câbles n'étant pas en contrainte, l'ensemble du système de commande peut être positionné facilement sur un écran thermique de tunnel sur une zone plane dédiée. Le problème qui se pose dans le cas d'une commande haute sur planche de bord, est que la position du système nécessite un cintrage des câbles de la commande de vitesses qui, par les contraintes que ce cintrage exerce sur le système, génère des difficultés pour maintenir le système correctement en place pendant l'opération de coiffage.

Pour résoudre les problèmes qui résultent de l'état antérieur de la technique, l'invention a pour objet un procédé de montage d'une commande de boîte de vitesses en position haute pour véhicule, dans lequel :
- on place un support de montage traversé par des câbles de commande de boîte de vitesses, au dessus d'un écran thermique en empêchant le support de montage de pouvoir pivoter ;
- on raccorde une première extrémité des câbles à une boîte de vitesse ;
- on coiffe l'écran thermique avec une caisse de façon à retenir le support de montage au dessus de l'écran thermique et à laisser émerger de la caisse, une deuxième extrémité des câbles vers le haut ;
- on fixe le support de montage sur la caisse.

Selon l' invention, pour empêcher le support de montage de pivoter, on fait passer au moins deux colonnettes dans deux ouvertures pratiquées à la base du support de montage de façon à établir un contact d'un premier point du support de montage avec la colonnette de sorte qu'un deuxième point du support de montage, à l'opposé du premier point par rapport à l'ouverture, empêche le support de montage de pivoter par mise en contact avec la colonnette.

Plus particulièrement, on utilise deux colonnettes comportant une butée qui établit le contact du premier point du support de montage, de façon à empêcher le support de montage d'être en appui sur l'écran thermique.

Avantageusement, on éloigne la colonnette du support de montage après avoir coiffé l'écran thermique avec la caisse.

Préférentiellement, on fixe le support de montage sur la caisse de façon à créer un découplage entre le support de montage et l'écran thermique.

L'invention a aussi pour objet un dispositif de montage d'une commande de boîte de vitesses en position haute pour véhicule, comprenant :
- des premiers moyens agencés pour placer un support de montage traversé par des câbles de commande de boîte de vitesses, au dessus d'un écran thermique en empêchant le support de montage de pouvoir pivoter ;
- des deuxièmes moyens agencés pour raccorder une première extrémité des câbles à une boîte de vitesse ;
- une caisse agencée pour coiffer l'écran thermique de façon à retenir le support de montage au dessus de l'écran thermique et à laisser émerger de la caisse, une deuxième extrémité des câbles vers le haut ;
- des troisièmes moyens agencés pour fixer le support de montage sur la caisse.

Selon l'invention les premiers moyens comprennent au moins deux colonnettes agencées pour passer dans une ouverture pratiquée à la base du support de montage de façon à établir un contact d'un premier point du support de montage avec la colonnette de sorte qu'un deuxième point du support de montage, à l'opposé du premier point par rapport à l'ouverture, empêche le support de montage de pivoter par mise en contact avec la colonnette.

Plus particulièrement, les colonnettes comportent une butée agencée pour établir le contact du premier point du support de montage, de façon à empêcher le support de montage d'être en appui sur l'écran thermique.

D'autres buts, avantages et caractéristiques, de l'invention apparaîtront dans la description qui suit d'un mode de réalisation préféré, non limitatif, de l'objet et de la portée de la présente demande de brevet, accompagnée de dessins dans desquels :
- la figure 1 est une vue en perspective d'un ensemble luge simplifié ne montrant que les éléments de commande de vitesses ;
- la figure 2A est une vue en perspective d'un poste POM avec les câbles fixés à la boîte de vitesses ;
- la figure 2B est une vue en perspective d'un détail de support de montage ;
- la figure 2C est une vue de côté de la figure 2B ;
- la figure 3A montre la contrainte des câbles provoquée par le cintrage et son effet sur un ensemble non maintenu ;
- la figure 3B est une vue rapprochée du support avec mise en oeuvre de l'invention ;
- les figures 4A et 4B montrent le système maintenu ;
- la figure 4C montre le système non maintenu dans une phase d'approche du tunnel ;
- la figure 4D est une vue en coupe partielle du support dans la phase d'approche du tunnel ;
- la figure 5 est une vue en perspective d'ensemble lors d'une phase de libération des piètements ;
- la figure 6 est une vue partielle en coupe du support maintenu en position après coiffage ;
- la figure 7 montre une étape de fixation finale.

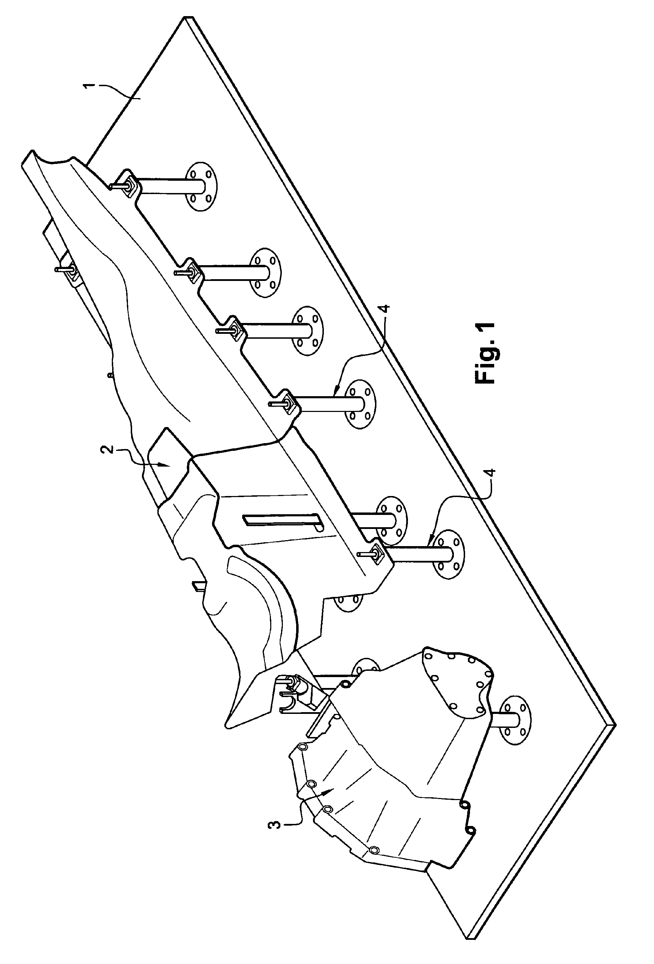

En référence à la figure 1, un ensemble de luge 1 est représenté sous forme simplifiée pour ne montrer que les éléments de commande de vitesses. Un écran thermique 2 est posé sur des piètements 4. D'autre part, une boîte de vitesses 3 est positionnée elle aussi sur des piètements à l'avant de l'écran thermique 2.

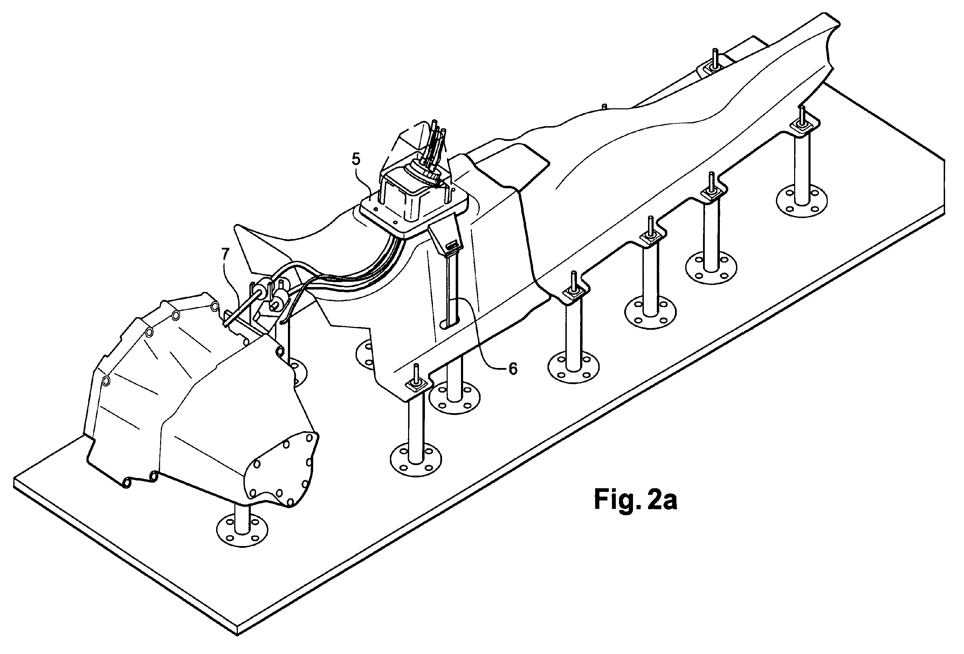

En référence à la figure 2A, on place un support de montage 5 sur l'écran thermique pour orienter les câbles de boîte de vitesses vers le levier de commande de vitesses destiné à être monté en position haute. Comme on peut le voir sur la figure 2A, les câbles 7 de commande de la boîte de vitesses, sont déjà montés sur la boîte de vitesses.

Au moins un piètement est prolongé par une colonnette 6 dont l'extrémité supérieure permet au support de montage de ne pas être en appui sur l'écran thermique qui n'a pas pour fonction de supporter la commande et les câbles.

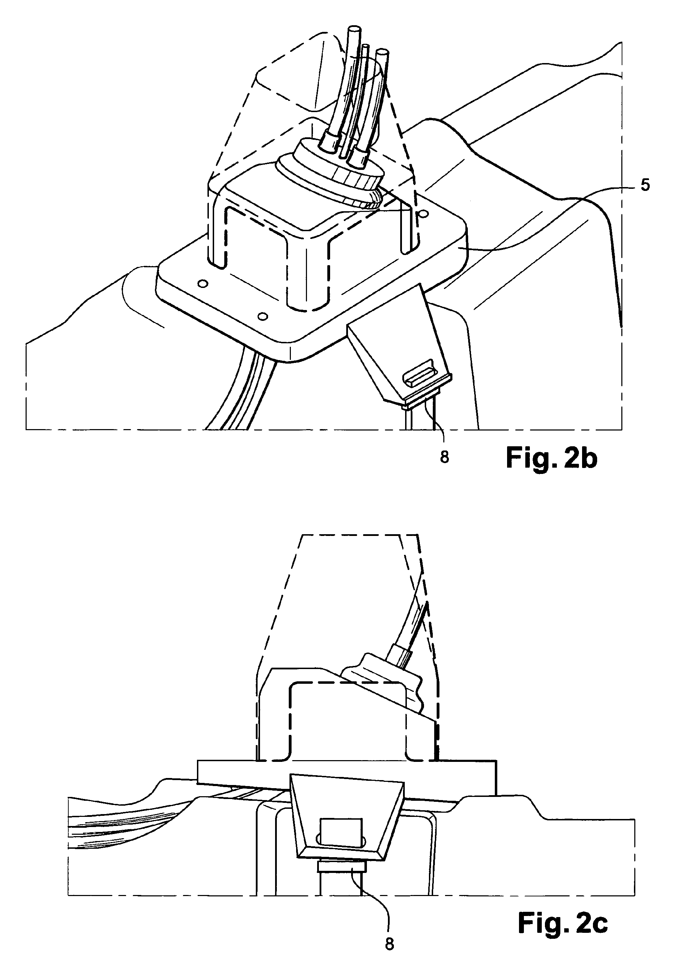

En référence à la figure 2B, la vue rapprochée du support de montage 5, placé sur l'écran thermique, permet de montrer que la colonnette 6 comporte une butée 8 située à proximité de son extrémité supérieure pour soutenir le support de montage 5 à distance de l'écran thermique.

En référence à la figure 2C, le support de montage en contact avec la butée 8, est empêché d'être mis en appui sur l'écran thermique.

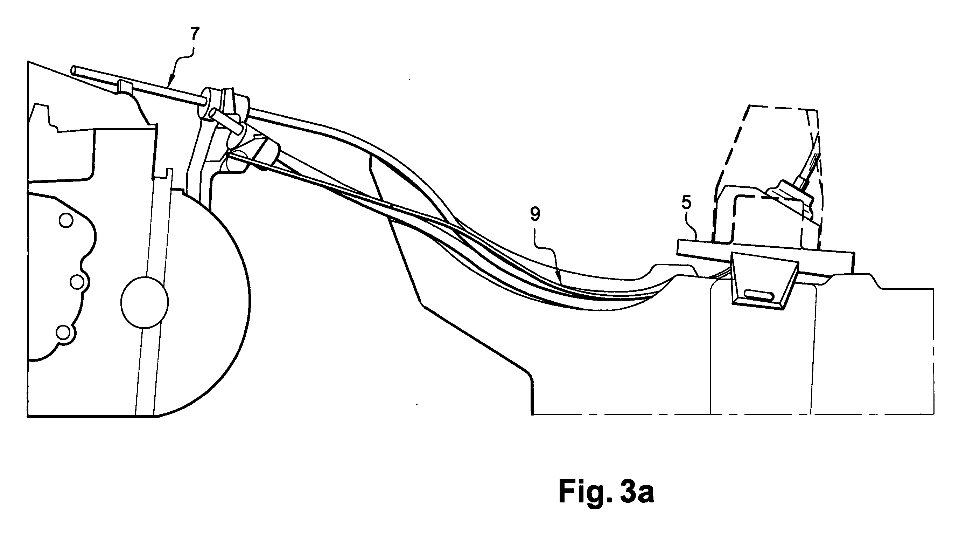

En référence à la figure 3A, les câbles 7 fixés sur la boîte de vitesses, ont un rayon de courbure 9 dont une valeur minimale égale à 200 millimètres génère une contrainte dans l'ensemble qui provoque un pivotement du support 5. L'absence de colonnette que l'on observe ici, déplace le support de montage de sa position d'origine vers l'arrière sous l'effet de la contrainte des câbles.

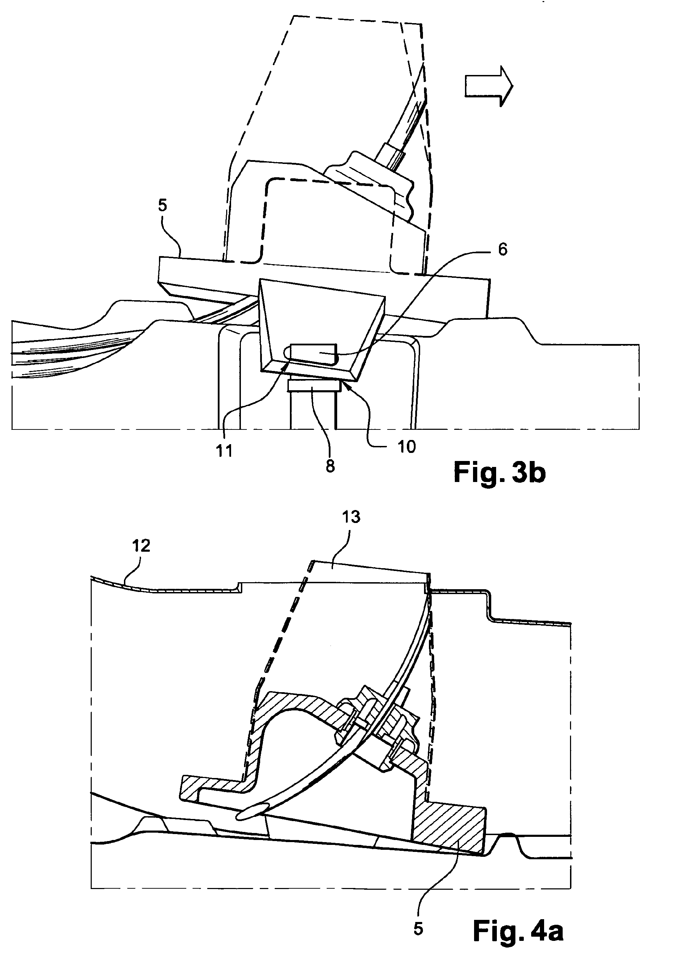

En référence à la figure 3B, la colonnette 6 permet de maintenir l'ensemble en position. Comme on peut l'observer sur la figure 3B, le haut de la colonnette 6 pénètre dans une ouverture pratiquée à la base du support 5 de façon à mettre un point 10 à la base du support 5 en contact avec la butée 8. Un basculement vers l'arrière du support 5 qui serait provoqué par la contrainte des câbles est alors arrêté par un point 11 de l'ouverture à l'opposé du point 10, qui est mis en contact avec l'extrémité de la colonnette 6 au-dessus de la butée 8.

En référence à la figure 4A, on place un cône de coiffage 13 sur le support 5 pour guider les câbles jusqu'au levier de commande de vitesses. On faite ensuite descendre une caisse 12 sur le support de montage 5 et l'écran thermique 2. Comme on peut le remarquer, une ouverture est pratiquée dans la caisse 12 pour permettre le passage du cône de coiffage 13.

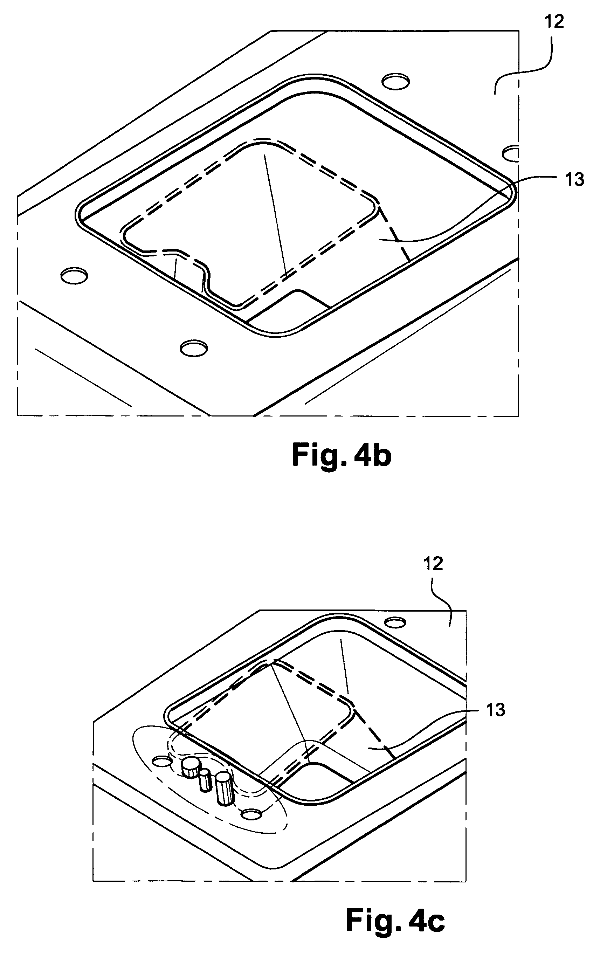

En référence à la figure 4B, le maintien en place du support 5 par la colonnette 6 et la butée 8 tel que représenté en référence à la figure 3B, permet un passage sans difficulté du cône de coiffage 13 à travers l'ouverture pratiquée dans la caisse 12 qui est prévue pour venir coiffer des éléments mécaniques.

En référence à la figure 4C, lorsque le système, et particulièrement le support de montage 5, n'est pas maintenu, il y a collision entre le cône de coiffage 13 et l'élément de caisse 12 généralement nommé tunnel.

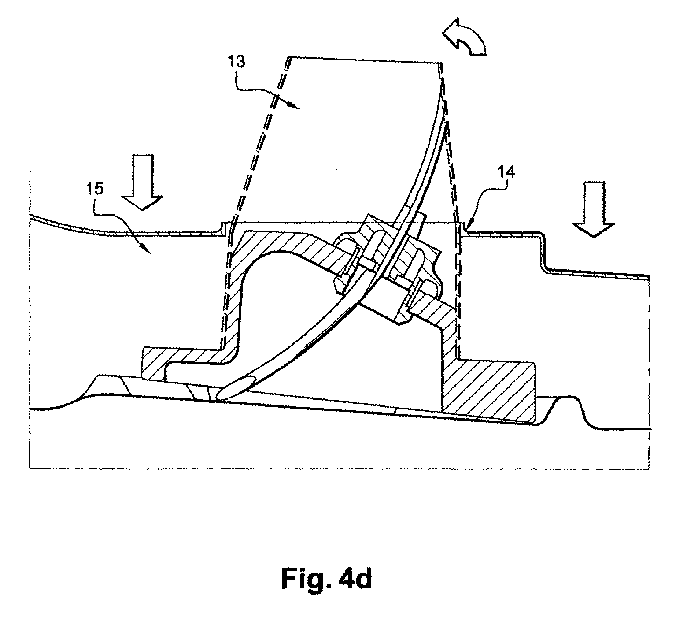

En référence à la figure 4D, dans la phase de descente, l'ouverture 14 pratiquée dans le tunnel, recentre l'ensemble qui comprend le support de montage 5 et le cône de coiffage 13 dont les parois extérieures entrent en contact avec les parois intérieures de l'ouverture 14. En effet, le cône de coiffage 13 suit la forme de l'ouverture 14 du tunnel 15.

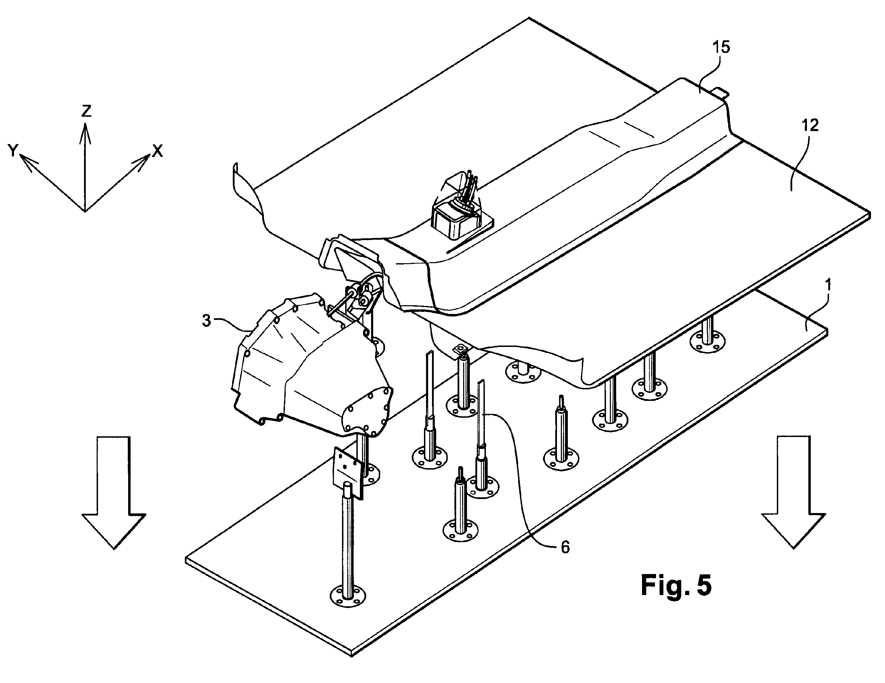

En référence à la figure 5, après avoir coiffé l'écran thermique 2, le support de montage 5 et les câbles de commande de la boîte de vitesses 7 par la partie de caisse 12 qui constitue le tunnel 15, on désolidarise de la luge 1, l'ensemble constitué par la boîte de vitesses 3 avec les câbles raccordés solidarisés de la caisse 12 par le tunnel 15, le support de montage 5 et l'écran thermique 2, par simple translation de la luge 1 suivant l'axe Z vers le bas. Les extrémités hautes de colonnette 6, glissent alors aisément hors des ouvertures pratiquées à la base du support de montage 5 sans être gênées par les butées 8 qui s'éloignent de la base du support de montage 5. On libère ainsi les piètements.

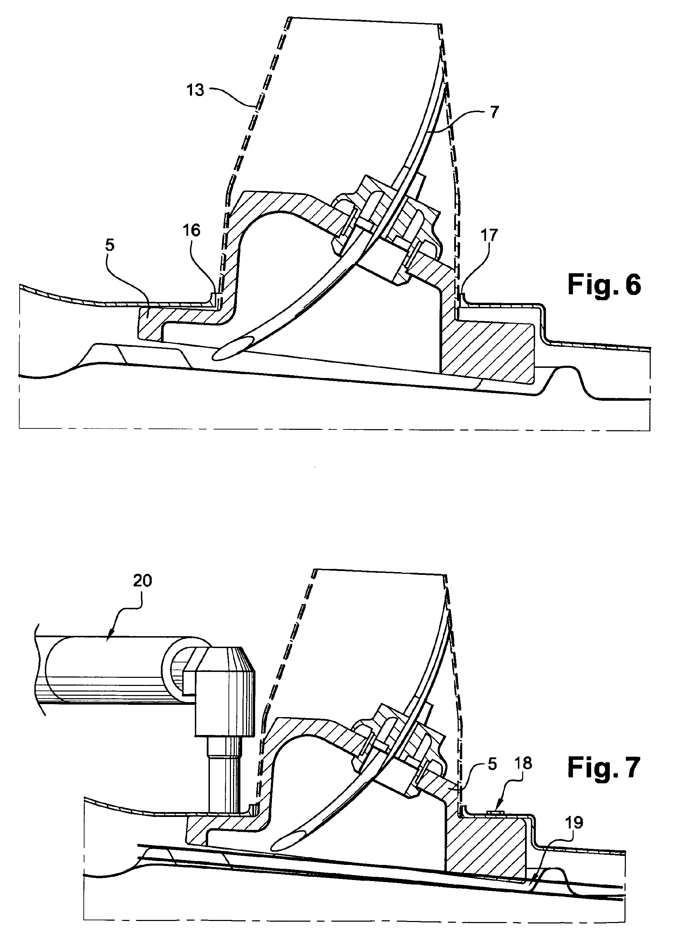

En référence à la figure 6, après coiffage, la contrainte dans les câbles suffit à maintenir le support de montage 5 dans le tunnel 15 par le phénomène de coincement du support 5 ou du cône de coiffage 13 mis en contact avec les bords 16, 17 de l'ouverture pratiquée dans le tunnel 15. L'ensemble est ainsi maintenu en position.

En référence à la figure 7, une visseuse 20 est utilisée dans une étape de fixation pour serrer des écrous 18 de façon à maintenir définitivement en place le support de montage 5 solidairement avec le tunnel 15. La fixation du support de montage 5 sur la paroi intérieure du tunnel 15, provoque un soulèvement du support de montage 5 qui laisse un jeu entre l'écran thermique 2 et la base du support de montage 5. Ce jeu constitue un découplage 19 de l'écran thermique 2 avec le support de montage 5. Le découplage 19 sert à éviter les nuisances sonores et vibratoires qui pourraient résulter d'un contact direct du support de montage 5 avec l'écran thermique 2. On fixe ensuite la deuxième extrémité des câbles au levier de vitesse.

## Revendications

1. Procédé de montage d'une commande de boîte de vitesses en position haute pour véhicule, dans lequel :
- on place un support de montage (5) traversé par des câbles (7) de commande de boîte de vitesses, au dessus d'un écran thermique (2) en empêchant le support de montage (5) de pouvoir pivoter ;
- on raccorde une première extrémité des câbles (7) à une boîte de vitesse (3) ;
- on coiffe l'écran thermique (2) avec une caisse (12) de façon à retenir le support de montage (5) au dessus de l'écran thermique et à laisser émerger de la caisse (12), une deuxième extrémité des câbles (7) vers le haut ;
- on fixe le support de montage (5) sur la caisse, **caractérisé en ce que**, pour empêcher le support de montage (5) de pivoter, on fait passer au moins deux colonnettes (6) dans deux ouvertures pratiquées à la base du support de montage (5) de façon à établir un contact d'un premier point (10) du support de montage (5) avec la colonnette (6) de sorte qu'un deuxième point (11) du support de montage (5), à l'opposé du premier point (10) par rapport à ladite ouverture, empêche le support de montage (5) de pivoter par mise en contact avec la colonnette (6).

2. Procédé selon la revendication 1, dans lequel, les colonnettes (6) comportent une butée (8) qui établit le contact du premier point (10) du support de montage (5), de façon à empêcher le support de montage (5) d'être en appui sur l'écran thermique.

3. Procédé selon l'une des revendications 1 ou 2, dans lequel on éloigne ladite colonnette (6) du support de montage après avoir coiffé l'écran thermique (2) avec la caisse (12).

4. Procédé selon l'une des revendications précédentes, dans lequel on fixe le support de montage (5) sur la caisse de façon à créer un découplage (19) entre le support de montage (5) et l'écran thermique (2).

5. Dispositif de montage d'une commande de boîte de vitesses en position haute pour véhicule et caisse de véhicule (12), comprenant :
- des premiers moyens (4,6) pour placer un support de montage (5) traversé par des câbles (7) de commande de boîte de vitesses, au dessus d'un écran thermique (2) en empêchant le support de montage (5) de pouvoir pivoter ;
- des deuxièmes moyens (1) pour raccorder une première extrémité des câbles (7) à une boîte de vitesse (3) ;
- ladite caisse (12) étant agencée pour coiffer l'écran thermique (2) de façon à retenir le support de montage (5) au dessus de l'écran thermique et à laisser émerger de la caisse (12), une deuxième extrémité des câbles (7) vers le haut ;
- des troisièmes moyens (18,20) pour fixer le support de montage (5) sur la caisse,
**caractérisé en ce que** les premiers moyens comprennent au moins deux colonnettes (6) agencées pour passer chacune dans une ouverture pratiquée à la base du support de montage (5) de façon à établir un contact d'un premier point (10) du support de montage (5) avec les colonnettes (6) de sorte qu'un deuxième point (11) du support de montage (5), à l'opposé du premier point (10) par rapport à ladite ouverture, empêche le support de montage (5) de pivoter par mise en contact avec les colonnettes (6).

6. Dispositif selon la revendication 5, **caractérisé en ce que** les colonnettes (6) comportent une butée (8) agencée pour établir le contact du premier point (10) du support de montage (5), de façon à empêcher le support de montage (5) d'être en appui sur l'écran thermique.

## Claims

1. Method for mounting a high-position gearbox control system for a vehicle, in which:
- a mounting support (5), through which gearbox control wires (7) pass, is positioned above a thermal screen (2) in such a way that the mounting support (5) is prevented from pivoting;
- a first end of the wires (7) is connected to a gearbox (3);
- the thermal screen (2) is covered with a shell (12) in such a way that the mounting support (5) is held above the thermal screen and a second end of the wires (7) is allowed to exit the shell (12) upwards;
- the mounting support (5) is fixed on the shell,
**characterised in that**, to prevent the mounting support (5) from pivoting, at least two posts (6) are passed through two openings formed in the base of the mounting support (5) so as to place a first point (10) on the mounting support (5) in contact with the post (6), in such a way that a second point (11) on the mounting support (5), opposite the first point (10) relative to said opening, prevents the mounting support (5) from pivoting by coming into contact with the post (6).

2. Method according to claim 1, in which the posts (6) comprise a stop (8) which establishes the contact with the first point (10) on the mounting support (5), in such a way as to prevent the mounting support (5) from resting on the thermal screen.

3. Method according to either claim 1 or claim 2, in which said post (6) is removed from the mounting support after the thermal screen (2) has been covered with the shell (12).

4. Method according to any one of the preceding claims, in which the mounting support (5) is fixed on the shell in such a way as to provide a decoupling (19) between the mounting support (5) and the thermal screen (2).

5. Device for mounting a high-position gearbox control system for a vehicle and vehicle shell (12), comprising:
- first means (4, 6) for positioning a mounting support (5), through which gearbox control wires (7) pass, above a thermal screen (2) in such a way that the mounting support (5) is prevented from pivoting;
- second means (1) for connecting a first end of the wires (7) to a gearbox (3);
- said shell (12) being arranged so as to cover the thermal screen (2) in such a way that the mounting support (5) is held above the thermal screen and a second end of the wires (7) is allowed to exit the shell (12) upwards;
- third means (18, 20) for fixing the mounting support (5) on the shell,
**characterised in that**, the first means comprise at least two posts (6) arranged so as each to pass through an opening formed in the base of the mounting support (5) so as to place a first point (10) on the mounting support (5) in contact with the posts (6), in such a way that a second point (11) on the mounting support (5), opposite the first point (10) relative to said opening, prevents the mounting support (5) from pivoting by coming into contact with the posts (6).

6. Device according to claim 5, **characterised in that** the posts (6) comprise a stop (8) arranged so as to establish the contact with the first point (10) on the mounting support (5), in such a way as to prevent the mounting support (5) from resting on the thermal screen.

## Patentansprüche

1. Verfahren zur Montage einer hoch positionierten Getriebesteuerung für ein Fahrzeug, wobei:
- ein Montageträger (5), durchquert von Kabeln (7) der Getriebesteuerung, über einem Hitzeschild (2) angebracht wird, um zu verhindern, dass sich der Montageträger (5) drehen kann;
- ein erstes Ende der Kabel (7) mit einem Getriebe (3) verbunden wird;
- das Hitzeschild (2) mit einem Kasten (12) bedeckt wird, um den Montageträger (5) über dem Hitzeschild zu halten und aus dem Kasten (12) ein zweites Ende der Kabel (7) nach oben heraustreten zu lassen;
- der Montageträger (5) auf dem Kasten befestigt wird, **dadurch gekennzeichnet, dass**, um zu verhindern, dass sich der Montageträger (5) dreht, mindestens zwei Ständer (6) in zwei Öffnungen eingeführt werden, die am Boden des Montageträgers (5) durchgeführt sind, um einen Kontakt eines ersten Punkts (10) des Montageträgers (5) mit dem Ständer (6) herzustellen, damit ein zweiter Punkt (11) des Montageträgers (5), gegenüber dem ersten Punkt (10) bezüglich der Öffnung, verhindert, dass sich der Montageträger (5) durch In-Kontakt-Bringen mit dem Träger (6) dreht.

2. Verfahren nach Anspruch 1, wobei die Ständer (6) einen Anschlag (8) umfassen, der den Kontakt des ersten Punkts (10) des Montageträgers (5) herstellt, um zu verhindern, dass der Montageträger (5) auf dem Hitzeschild aufliegt.

3. Verfahren nach einem der Ansprüche 1 oder 2, wobei der Ständer (6) vom Montageträger entfernt wird, nachdem der Hitzeschild (2) mit dem Kasten (12) bedeckt wurde.

4. Verfahren nach einem der vorhergehenden Ansprüche, wobei der Montageträger (5) auf dem Kasten befestigt wird, um eine Entkoppelung (19) zwischen dem Montageträger (5) und dem Hitzeschild (2) zu erzeugen.

5. Vorrichtung zur Montage einer hoch positionierten Getriebesteuerung für ein Fahrzeug und Fahrzeugkasten (12), umfassend:
- erste Mittel (4, 6), um einen Montageträger (5), durchquert von Kabeln (7) der Getriebesteuerung, über einem Hitzeschild (2) anzubringen und zu verhindern, dass sich der Montageträger (5) drehen kann;
- zweite Mittel (1), um ein erstes Ende der Kabel (7) mit einem Getriebe (3) zu verbinden;
- den Kasten (12), der angebracht ist, um den Hitzeschild (2) zu bedecken, um den Montageträger (5) über dem Hitzeschild zu halten und aus dem Kasten (12) ein zweites Ende der Kabel (7) nach oben heraustreten zu lassen;
- dritte Mittel (18, 20), um den Montageträger (5) auf dem Kasten zu befestigen,
**dadurch gekennzeichnet, dass** die ersten Mittel zwei Ständer (6) umfassen, angeordnet, um jeweils in eine Öffnung eingeführt werden, die am Boden des Montageträgers (5) durchgeführt ist, um einen Kontakt eines ersten Punkts (10) des Montageträgers (5) mit den Ständern (6) herzustellen, damit ein zweier Punkt (11) des Montageträgers (5), gegenüber dem ersten Punkt (10) bezüglich der Öffnung, verhindert, dass sich der Montageträger (5) durch In-Kontakt-Bringen mit den Ständern (6) dreht.

6. Verfahren nach Anspruch 5, **dadurch gekennzeichnet, dass** die Ständer (6) einen Anschlag (8) umfassen, angeordnet, um den Kontakt des ersten Punkts (10) des Montageträgers (5) herzustellen, um zu verhindern, dass der Montageträger (5) auf dem Hitzeschild aufliegt.
